(19) Europäisches Patentamt / European Patent Office / Office européen des brevets

(11) **EP 2 181 315 B1**

(12) **FASCICULE DE BREVET EUROPEEN**

(45) Date de publication et mention de la délivrance du brevet:
**12.07.2017   Bulletin 2017/28**

(21) Numéro de dépôt: **08787533.2**

(22) Date de dépôt: **27.08.2008**

(51) Int Cl.:
**G01M 11/02** *(2006.01)*    **G01M 11/04** *(2006.01)*
**G02B 23/02** *(2006.01)*

(86) Numéro de dépôt international:
**PCT/EP2008/061241**

(87) Numéro de publication internationale:
**WO 2009/027440 (05.03.2009 Gazette 2009/10)**

(54) **DISPOSITIF DE MESURE DE LA FONCTION DE TRANSFERT DE MODULATION D'INSTRUMENTS OPTIQUES DE GRANDE DIMENSION**

VORRICHTUNG ZUR MESSUNG DER MODULATIONSÜBERTRAGUNGSFUNKTION BEI GROSSEN OPTISCHEN INSTRUMENTEN

DEVICE FOR MEASURING THE MODULATION TRANSFER FUNCTION IN LARGE SIZE OPTICAL INSTRUMENTS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité:  **29.08.2007   FR 0706034**

(43) Date de publication de la demande:
**05.05.2010   Bulletin 2010/18**

(73) Titulaire: **THALES**
**92400 Courbevoie (FR)**

(72) Inventeurs:
• **PERRIN, Guillaume**
**F-06400 La Colle Sur Loup (FR)**
• **LIOTARD, Arnaud**
**F-06130 Grasse (FR)**
• **BENARD, Hervé**
**83440 Montauroux (FR)**
• **BLANC, Philippe**
**F-06140 Vence (FR)**

(74) Mandataire: **Bréda, Jean-Marc et al**
**Marks & Clerk France**
**Conseils en Propriété Industrielle**
**Immeuble " Visium "**
**22 Avenue Aristide Briand**
**94117 Arcueil Cedex (FR)**

(56) Documents cités:
**EP-A- 0 209 457        WO-A-01/02822**
**US-A1- 2007 236 701**

**Description**

Le domaine de l'invention est celui du contrôle et de la mesure de la qualité optique d'instruments optiques comportant des éléments optiques de grande dimension.

Généralement, ces instruments comportent une optique de grand diamètre qui forme, sur la surface photo-sensible d'un boîtier de détection, l'image d'un objet lumineux à l'infini. Le domaine d'application privilégié est celui des télescopes spatiaux destinés à l'observation terrestre, planétaire ou astronomique. Ces instruments seront envoyés dans l'espace. Il est, par conséquent, fondamental de parfaitement connaître leurs performances optiques avant le lancement.

On attend des instruments optiques de grande dimension une très grande qualité optique, de façon à conserver l'avantage de leur grande pupille. Si bien conçus et réalisés qu'ils puissent être, il est impossible de faire entièrement confiance à la qualité du montage opto-mécanique de ces instruments et il nécessaire de les contrôler sur des bancs de mesure adaptés. Une méthode de contrôle de surfaces optiques seules est divulgué dans le document WO 01/02822. D'une façon plus précise, un instrument d'observation est composé de deux parties, la partie optique appelée télescope et la partie électronique appelée détecteur. Ces deux éléments peuvent avoir été préalablement caractérisés de manière indépendante. La qualité optique de l'instrument est caractérisée par une erreur de phase du front d'onde, encore appelée en terminologie anglo-saxonne WFE, acronyme signifiant WaveFront Error. Cette WFE prend en compte les aberrations des miroirs du télescope, mais également les différents défauts d'alignement des miroirs constituant le télescope ou du détecteur par rapport au télescope. Connaissant la WFE, on en déduit la fonction de transfert optique du télescope encore notée $FTO_{telescope}$. Cette fonction est reliée à la précédente par une classique relation d'auto-corrélation. De la même façon, le détecteur possède sa fonction de transfert optique notée $FTO_{detecteur}$. La FTO de l'instrument notée $FTO_{instrument}$ est le produit de la $FTO_{telescope}$ et de la $FTO_{detecteur}$.

Les défauts d'alignement entre les différents composants de l'instrument n'étant pas prévisibles, la mesure de la FTO est indispensable pour caractériser l'instrument. Connaissant la fonction de transfert optique $FTO_{instrument}$, on calcule alors la fonction de transfert de modulation $FTM_{instrument}$ de l'instrument par passage au module de la fonction de transfert de modulation.

Un banc de mesure comprend généralement un « marbre » support 1 disposé dans des conditions environnementales maîtrisées. On peut, par exemple, disposé sur ce marbre un caisson à vide 2. L'instrument à contrôler 3 et les moyens de mesure et de contrôle 4 sont alors disposés sur le marbre à l'intérieur du caisson. Sur les différentes figures représentant le banc de mesure, l'instrument à contrôler comporte, à titre d'exemple, un objectif catoptrique à deux miroirs 31 et 32 et un boîtier de détection 33. Pour éliminer les problèmes de vibrations, le caisson est posé sur des colonnes comportant des amortisseurs 5. Les différents moyens opto-électroniques de mesure du banc sont raccordés à une baie de commande 6 extérieure au banc optique.

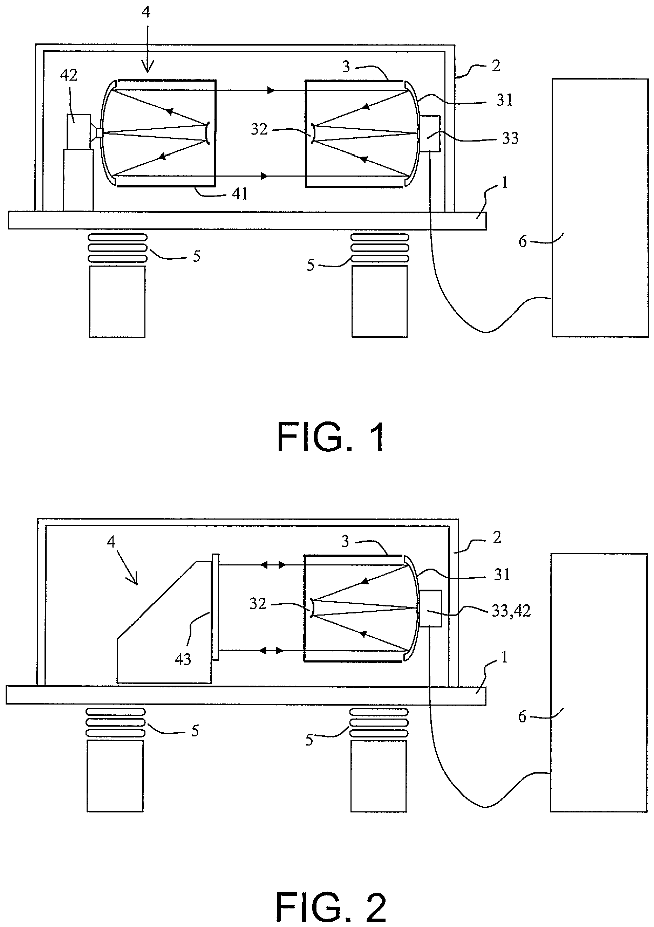

Une première méthode pour contrôler un instrument est illustrée en figure 1. Dans ce cas, les moyens de mesure consistent essentiellement en un collimateur 41 de contrôle fixe. Ce collimateur comporte une pupille de diamètre au moins égal à celui de la pupille de l'instrument à contrôler. Un bloc source d'émission 42 est disposé au foyer du collimateur 41. Ce collimateur doit être de très grande qualité optique, et le bloc source 42 doit être parfaitement réglé à son foyer. Pour la vérification d'instruments de grande dimension, cette solution est onéreuse, la manufacture d'un grand collimateur étant techniquement très complexe et très longue à réaliser.

Une seconde méthode pour contrôler un instrument est illustrée en figure 2. Dans ce cas, les moyens de mesure consistent essentiellement en un miroir plan d'auto-collimation 43. L'instrument devient son propre collimateur. Il faut alors disposer une source optique 42 au foyer de l'instrument. Or, cet emplacement est réservé au boîtier de détection 33 de l'instrument. Il faut donc réaliser des aménagements opto-mécaniques importants de façon à pouvoir ajouter la source optique ainsi que des moyens optiques de séparation des faisceaux optiques aller et retour. Ces contraintes supplémentaires sont souvent jugées inacceptables par les concepteurs de l'instrument.

Le banc selon l'invention comporte un collimateur dont le diamètre est inférieur à celui de l'instrument à mesurer. Ce collimateur est intégré dans un support mobile en translation. Le contrôle total de l'instrument est alors effectué en déplaçant le collimateur dans son support mobile de façon à balayer toute la pupille de l'instrument. Ainsi, on évite les inconvénients précédents : utilisation d'un collimateur à grande pupille ou aménagements complexes du boîtier de détection.

Plus précisément, l'invention a pour objet un banc de contrôle optique pour instrument optique, l'instrument comportant un objectif optique et un boîtier de photo-détection disposé au foyer dudit objectif, la pupille de l'objectif optique ayant un diamètre $D_T$, l'instrument à contrôler étant disposé sur le banc, le banc comprenant au moins :

- un collimateur équipé d'une source d'émission adaptée audit instrument, le collimateur et l'instrument étant agencés de façon qu'une image de ladite source se forme sur la surface de photo-détection du boîtier,
- des moyens d'analyse de ladite image,

caractérisé en ce que :

- la pupille optique du collimateur a diamètre $D_c$ inférieur au diamètre $D_T$ de la pupille de l'objectif,
- le banc de contrôle comporte également des moyens de déplacement en translation du collimateur, agencés de façon que le collimateur puisse occuper différentes positions,
- pour chaque position, le collimateur éclaire une partie de la pupille de l'objectif optique appelée sous-pupille, une image appelée sous-image se formant sur la surface de photo-détection du boîtier,
- l'ensemble des différentes sous-pupilles est agencé de façon à couvrir au moins la pupille de l'objectif optique ;
- les moyens d'analyse comportent des moyens de restitution permettant à partir des différentes sous-images de reconstruire la carte de la WFE de la partie optique de l'instrument, somme des aberrations des miroirs du télescope et des défauts d'alignement.

Avantageusement, les moyens de restitution comportent :

- des premiers moyens permettant de calculer, pour chaque sous-pupille, à partir de l'analyse de chaque sous-image associée, une erreur locale de front d'onde notée $WFE_k$,
- des seconds moyens permettant à partir des différentes erreurs locales de front d'onde de calculer l'erreur de front d'onde globale de la pupille de la partie optique de l'instrument,
- des troisièmes moyens permettant, à partir de l'erreur de front d'onde globale de la pupille de la partie optique de l'instrument et de caractéristiques photo-électriques du détecteur de retrouver la fonction de transfert de modulation de l'instrument.

Avantageusement, les premiers moyens de calcul comprennent un algorithme de restitution de phase, le banc comporte des moyens de translation de la source d'émission, le collimateur a un diamètre $D_c$ compris entre 50% et 70% du diamètre $D_T$ de l'optique de l'instrument, chaque sous-pupille possède avec au moins une autre sous-pupille une zone de recouvrement d'au moins 20% en surface.

L'invention sera mieux comprise et d'autres avantages apparaîtront à la lecture de la description qui va suivre donnée à titre non limitatif et grâce aux figures annexées parmi lesquelles :

La figure 1 représente un premier mode de réalisation d'un banc de contrôle optique selon l'art antérieur ;
La figure 2 représente un second mode de réalisation d'un banc de contrôle optique selon l'art antérieur ;
Les figures 3 et 4 représentent un banc de contrôle optique selon l'invention avec deux positions différentes du collimateur ;
La figure 5 représente une vue de la pupille P de l'instrument, de la sous-pupille $SP_k$ éclairée par le collimateur dans une première position, et de la sous-image $SI_k$ se formant sur le détecteur ;
La figure 6 représente une vue de la pupille P de l'instrument et d'une configuration de sous-pupilles $SP_k$ éclairées par le collimateur disposé dans différentes positions ;
La figure 7 représente une vue de la pupille P de l'instrument et d'une configuration de sous-pupilles $SP_k$ éclairées par le collimateur disposé dans trois positions lorsque le collimateur possède une obturation centrale ;
La figure 8 représente le lien existant entre chaque sous-image $SI_k$ et la surface d'onde $WFE_K$ correspondante dans la sous-pupille $SP_k$ éclairée ;
La figure 9 représente le principe de calcul de l'erreur de front d'onde correspondant à la pleine pupille ;
La figure 10 représente une coupe dans l'espace des fréquences de la fonction de transfert de modulation $FTM_{instrument}$ de l'instrument, calculée à partir de l'erreur de front d'onde globale WFE de la pupille du télescope et de la FTO du détecteur.

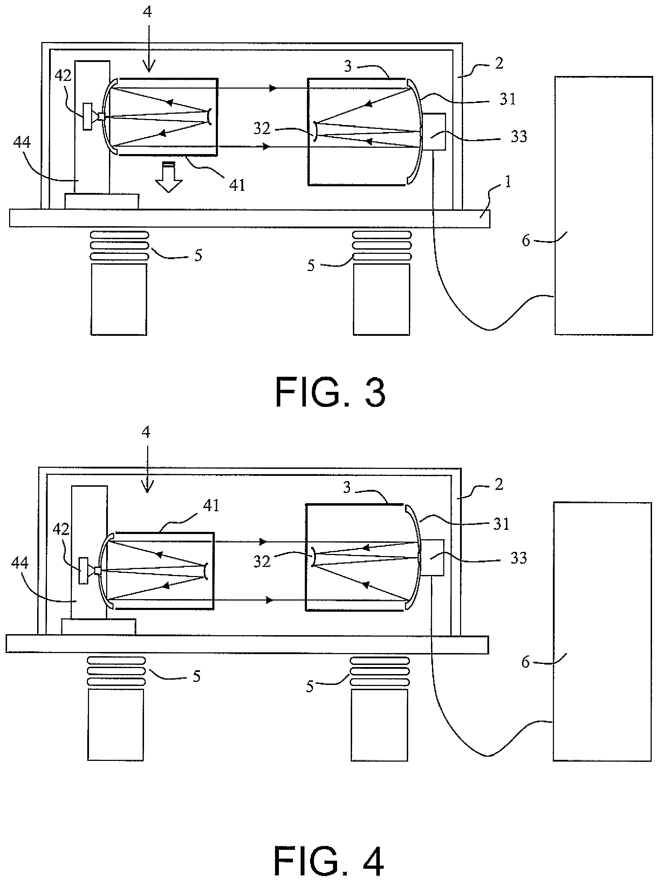

A titre d'exemple non limitatif, le banc de contrôle selon l'invention est représenté en figures 3 et 4. Ce banc de mesure comprend un « marbre » 1 placé à l'intérieur d'un caisson à vide 2. L'instrument à contrôler 3 et les moyens de mesure et de contrôle 4 sont disposés sur le marbre à l'intérieur du caisson. L'instrument à contrôler comporte, à titre d'exemple, un objectif catoptrique à deux miroirs 31 et 32 et un boîtier de détection 33. Pour éliminer les problèmes de vibrations, le marbre est posé sur des colonnes comportant des amortisseurs 5. Les différents moyens opto-électroniques de mesure du banc sont raccordés à une baie de commande 6 extérieure au banc qui comprend les moyens d'analyse spécifiques du banc de contrôle selon l'invention.

Le collimateur 41 des figures 3 et 4 comporte également un objectif catoptrique à deux miroirs. Le collimateur est équipé d'une source d'émission adaptée à l'instrument et émet une surface d'onde plane, le collimateur et l'instrument étant agencés de façon que ladite source s'image sur la surface de photo-détection du boîtier. La pupille optique du collimateur a un diamètre $D_c$ inférieur au diamètre $D_T$ de l'instrument à contrôler. A titre indicatif, le collimateur a un diamètre compris entre 50% et 70% du diamètre du télescope. Le diamètre du collimateur doit être suffisamment grand de façon à limiter le nombre des mesures nécessaires au contrôle. On estime généralement que le nombre de mesures doit être de l'ordre d'une dizaine. Le banc de contrôle comporte des moyens de déplacement en translation 44 du collimateur perpendiculairement à son axe optique, agencés de façon que le collimateur puisse occuper différentes positions. Ces moyens peuvent être des platines en translation motorisées à grande course. La course des moyens de translation est suffisante pour que la partie éclairée du télescope par le collimateur puisse balayer l'ensemble de la pupille de l'instrument. Par exemple, sur la figure 3, le collimateur est en position « haute » et éclaire le haut de la pupille de l'instrument. Sur la figure 4, le collimateur est en position « basse » et éclaire le bas de la pupille de l'instrument.

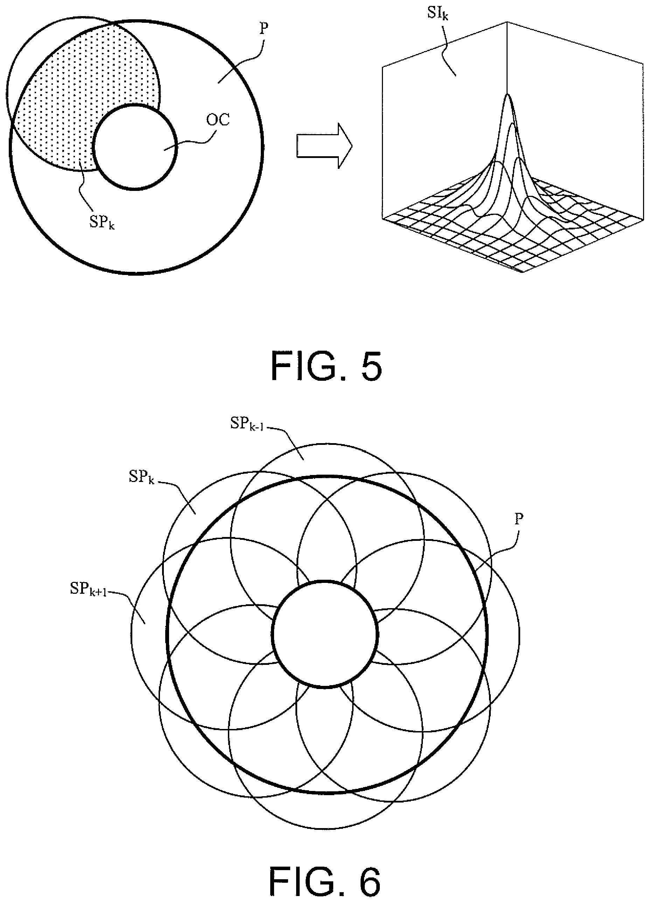

Pour chaque position, le collimateur éclaire une partie de la pupille de l'objectif optique appelée sous-pupille $SP_k$. Par exemple, sur la figure 5, la zone éclairée se situe sur la partie supérieure gauche de la pupille P de l'instrument. On remarque sur cette figure que la pupille de l'instrument possède une obturation centrale OC due au miroir secondaire de l'instrument. Il est clair que le banc selon l'invention fonctionne de la même manière pour des instruments sans obturation centrale. Une sous-image $SI_k$ est alors formée sur la surface de photo-détection du boîtier. Sur la partie droite de la figure 5, les variations d'énergie dans cette sous-image $SI_k$ sont représentées en représentation surfacique tridimensionnelle. Cette sous-image $SI_k$ est transformée par les capteurs du boîtier de détection en signal électrique envoyé aux moyens d'analyse de la baie de commande.

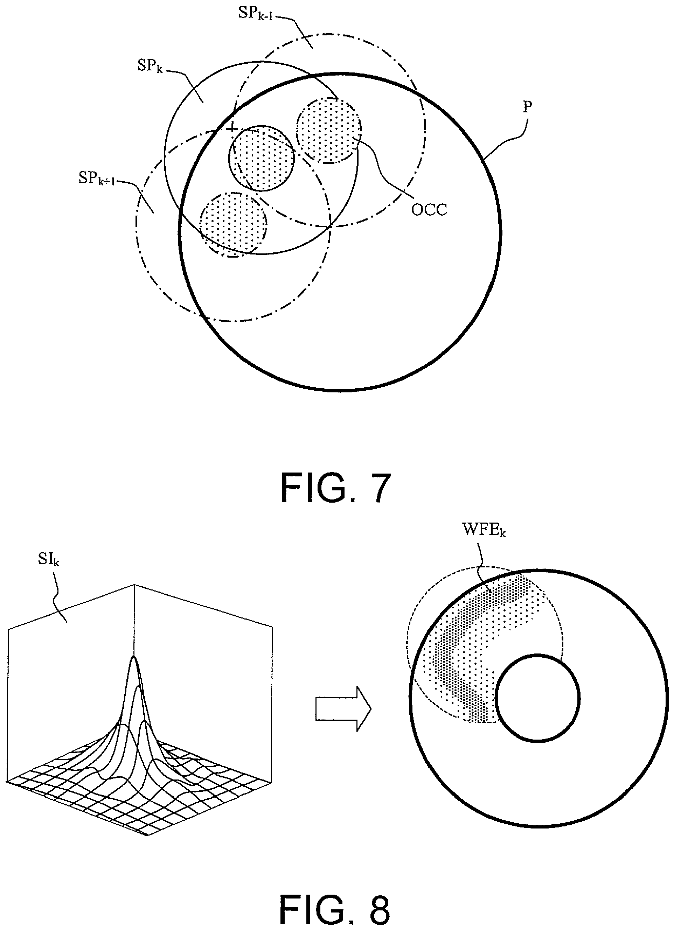

L'ensemble des différentes sous-pupilles $SP_k$ éclairées par le collimateur est agencé de façon à couvrir au moins la pupille P de l'objectif optique. Le nombre et l'arrangement des sous-pupilles dépend essentiellement des diamètres du collimateur et de l'objectif, de leur géométrie respective et du taux de recouvrement que l'on souhaite obtenir. On estime que chaque sous-pupille doit posséder avec au moins une autre sous-pupille une zone de recouvrement d'au moins 20%. La figure 6 montre un agencement possible où un arrangement de huit sous-pupilles permet de couvrir l'intégralité de la pupille de l'instrument. Dans la plupart des cas, le collimateur possède une obturation centrale OCC. Dans ce cas, comme illustré en figure 7, il est important de choisir un arrangement qui ne laisse pas subsister de zones mortes.

Les moyens d'analyse comportent des moyens de restitution permettant à partir des différentes sous-images $SI_k$ de reconstruire une carte de la WFE optique de l'instrument en pleine pupille. D'une façon générale, ces moyens de restitution sont des moyens de calcul numériques.

Ces moyens comportent :

- des premiers moyens permettant de calculer, pour chaque sous-pupille, à partir de l'analyse de chaque sous-image associée, une erreur locale de front d'onde notée $WFE_k$,
- des seconds moyens permettant à partir des différentes erreurs locales de front d'onde de calculer l'erreur de front d'onde globale de la pupille de la partie optique de l'instrument,
- des troisièmes moyens permettant à partir de l'erreur de front d'onde globale de la pupille de l'instrument et de caractéristiques photo-électriques du détecteur de retrouver la fonction de transfert de modulation de l'instrument.

Ces moyens sont détaillés ci-dessous.

Comme on l'a dit, il est nécessaire, connaissant la sous-image $SI_k$ due à une sous-pupille $SP_k$ d'en déduire la $WFE_k$ correspondante. Cette fonction est illustrée en figure 8. Sur cette figure, les variations de phase de la $WFE_k$ sont représentées par des nuances de gris. On appelle généralement cette opération « restitution de phase » ou en terminologie anglaise : « phase retrieval ». Elle peut être réalisée par un algorithme de restitution de phase itératif. On citera, à titre d'exemple, les algorithmes de type « Gerchberg-Saxton » développés dans les années 1970. Ces algorithmes ont été adaptés aux applications optiques dans les années 1990 à la suite des problèmes optiques rencontrés dans le fonctionnement du télescope spatial « Hubble » et sont actuellement bien maîtrisés.

Dans le cas général, cette opération reste complexe dans la mesure où plusieurs WFEs sont susceptibles de donner la même image et dans la mesure où une faible variation de l'image peut être due à une grande variation de l'écart de phase de la WFE. Cependant, dans notre cas particulier, des connaissances a priori telles que la donnée de la $WFE_{telescope}$ théorique du télescope ou de la FTO du détecteur permettent d'améliorer sensiblement la convergence de l'algorithme de restitution de phase. En pratique, l'algorithme de restitution de phase consiste à ajuster un jeu de paramètres $\alpha$ décrivant la WFE par le biais de méthodes d'optimisation ou d'algorithmes itératifs. Ces coefficients sont, par exemple, des coefficients de Zernike, chacun des coefficients correspondant à un défaut géométrique spécifique comme, par exemple, le basculement de la surface d'onde.

Pour lever certaines indéterminations ou en l'absence d'à priori, il est possible d'effectuer les calculs en utilisant de nouvelles sous-images obtenues en introduisant un défaut connu sur la surface d'onde générée par le collimateur. A cet effet, la source d'émission du collimateur peut comporter des moyens de translation. En déplaçant la source d'émission, on introduit un défaut de focalisation parfaitement connu à la WFE optique. Ces nouvelles données sont exploitées par un algorithme dit de « diversité de phase ».

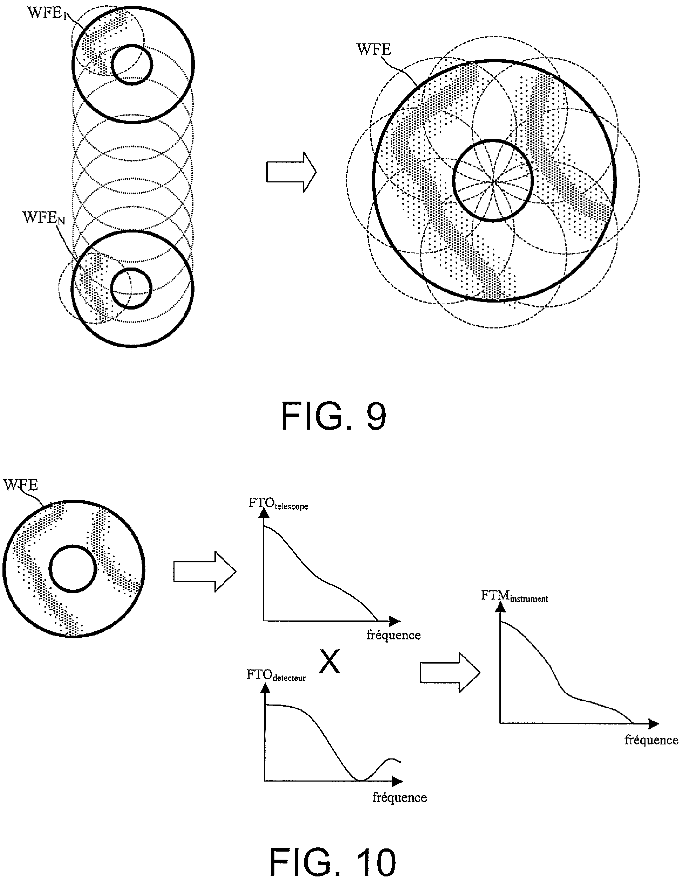

Connaissant les différents écarts à la surface d'onde donnés par chaque sous-pupille, les seconds moyens permettent de retrouver l'écart à la surface d'onde globale de la pupille de l'instrument. Cette fonction est illustrée en figure 9. On utilise, à cet effet, un algorithme de recalage adapté. A titre d'exemple, cet algorithme peut être un de ceux que l'on utilise en interférométrie dite de « couplage de zones », plus connue sous le nom de « stitching interferometry ». Ces algorithmes sont utilisés pour retrouver un écart de front d'onde global à partir d'écarts de front d'onde mesurés localement. Cette étape de recalage permet de réaliser l'union des N cartes des $WFE_k$ élémentaires pour retrouver la WFE globale de la partie optique de l'instrument. On s'affranchit ainsi d'erreurs de mesure provenant soit des mouvements des pièces optiques et mécaniques composant l'instrument, soit des erreurs relatives d'alignement dues aux positions successives du collimateur.

Connaissant maintenant la WFE de la partie optique de l'instrument, il reste à calculer la fonction de transfert de modulation de l'instrument, notée $FTM_{instrument}$. Cette fonction est illustrée en figure 10. Les calculs effectués dans cette dernière étape sont les suivants :

On définit une fonction pupille complexe p à partir de la WFE pleine pupille et de son support $p_0$ selon l'expression mathématique :

$$p = p_0 . e^{iWFE}$$

L'auto-corrélation de cette fonction complexe donne la FTO de l'ensemble optique contrôlé encore notée $FTO_{telescope}$. On a :

$$FTO_{telescope} = p \otimes p$$

La FTM de l'instrument est ensuite obtenue en prenant la valeur absolue de la FTO de l'instrument, produit de la $FTO_{telescope}$ et de la $FTO_{detecteur}$. On a :

$$FTM_{instrument} = \left| FTO_{instrument} \right| = \left| FTO_{telescope} \times FTO_{detecteur} \right|$$

## Revendications

1. Banc de contrôle optique pour instrument optique, l'instrument comportant un objectif optique (3) et un boîtier de photo-détection (33) disposé au foyer dudit objectif, la pupille optique de l'objectif optique ayant un diamètre $D_T$, l'instrument à contrôler étant disposé sur le banc, le banc comprenant au moins :

   • un collimateur (4) équipé d'une source d'émission (42) adaptée audit instrument et émettant une surface d'onde plane, le collimateur et l'instrument étant agencés de façon qu'une image de ladite source se forme sur la surface de photo-détection du boîtier,
   • des moyens d'analyse (6) de ladite image,

   **caractérisé en ce que** :

   • la pupille optique du collimateur a diamètre $D_c$ inférieur au diamètre $D_T$ de la pupille de l'objectif,
   • le banc de contrôle comporte également des moyens de déplacement en translation (44) du collimateur, agencés de façon que le collimateur puisse occuper différentes positions,
   • pour chaque position, le collimateur éclaire une partie de la pupille de l'objectif optique appelée sous-pupille $SP_k$, une image appelée sous-image $SI_k$ se formant sur la surface de photo-détection du boîtier,
   • l'ensemble des différentes sous-pupilles $SP_k$ est agencé de façon à couvrir au moins la pupille de l'objectif optique ;
   • les moyens d'analyse comportent des moyens de restitution permettant au moins, à partir des différentes sous-images $SI_k$, de reconstruire la carte de l'erreur de phase du front d'onde optique de l'instrument, encore appelée « WFE ».

2. Banc de contrôle optique selon la revendication 1, **caractérisé en ce que** les moyens de restitution comportent :

   • des premiers moyens permettant de calculer, pour chaque sous-pupille $SP_k$, à partir de l'analyse de chaque

sous-image associée SI$_k$, une erreur locale de front d'onde notée WFE$_k$,

• des seconds moyens permettant à partir des différentes erreurs locales de front d'onde WFE$_k$ de calculer l'erreur de front d'onde globale WFE de la pupille de la partie optique de l'instrument,

• des troisièmes moyens permettant, à partir de l'erreur de front d'onde globale de la pupille de la partie optique de l'instrument et de caractéristiques photo-électriques du détecteur, de retrouver la fonction de transfert de modulation de l'instrument.

**3.** Banc de contrôle optique selon la revendication 2, **caractérisé en ce que** les premiers moyens de calcul comprennent un algorithme de restitution de phase.

**4.** Banc de contrôle optique selon la revendication 1, **caractérisé en ce que** le collimateur est équipé de moyens de translation de sa source d'émission.

**5.** Banc de contrôle optique selon la revendication 1, **caractérisé en ce que** le collimateur a diamètre compris entre 50% et 70% du diamètre de la pupille de l'instrument.

**6.** Banc de contrôle optique selon la revendication 1, **caractérisé en ce que** chaque sous-pupille possède avec au moins une autre sous-pupille une zone de recouvrement d'au moins 20%.

## Patentansprüche

**1.** Optischer Prüfstand für ein optisches Instrument, wobei das Instrument eine optische Linse (3) und ein Fotodetektionsgehäuse (33) umfasst, das am Brennpunkt der Linse angeordnet ist, wobei die optische Pupille der optischen Linse einen Durchmesser D$_T$ hat, wobei das zu prüfende Instrument auf dem Prüfstand angeordnet ist, wobei der Prüfstand wenigstens Folgendes umfasst:

• einen Kollimator (4), ausgestattet mit einer Emissionsquelle (42), die an das Instrument angepasst ist und eine flache Wellenfront emittiert, wobei der Kollimator und das Instrument so ausgelegt sind, dass ein Bild von der Quelle auf der Fotodetektionsfläche des Gehäuses entsteht;

• Mittel (6) zum Analysieren des Bildes,

**dadurch gekennzeichnet, dass**:

• der Durchmesser D$_c$ der optischen Pupille des Kollimators kleiner ist als der Durchmesser D$_T$ der Pupille der Linse;

• wobei der Prüfstand auch Mittel (44) zum translationalen Bewegen des Kollimators umfasst, wobei die Mittel so ausgelegt sind, dass der Kollimator verschiedene Positionen einnehmen kann;

• der Kollimator für jede Position einen Teil der Pupille der optischen Linse, Subpupille SP$_k$ genannt, beleuchtet, wobei ein Bild, Subbild SI$_k$ genannt, auf der Fotodetektionsfläche des Gehäuses entsteht;

• der Satz von verschiedenen Subpupillen SP$_k$ so angeordnet ist, dass er wenigstens die Pupille der optischen Linse bedeckt;

• die Analysemittel Wiederherstellungsmittel umfassen, die wenigstens eine Rekonstruktion, auf der Basis der verschiedenen Subbilder SI$_k$, der Karte des Phasenfehlers der optischen Wellenfront, auch "WFE" genannt, des Instruments zulassen.

**2.** Optischer Prüfstand nach Anspruch 1, **dadurch gekennzeichnet, dass** die Wiederherstellungsmittel Folgendes umfassen:

• erste Mittel, die eine Berechnung eines lokalen Wellenfrontfehlers, WFE$_k$ genannt, für jede Subpupille SP$_k$ auf der Basis der Analyse jedes assoziierten Subbildes SI$_k$ zulassen;

• zweite Mittel, die auf der Basis der verschiedenen lokalen Wellenfrontfehler WFE$_k$ die Berechnung des Gesamtwellenfrontfehlers WFE für die Pupille des optischen Teils des Instruments zulassen;

• dritte Mittel, die auf der Basis des gesamten Wellenfrontfehlers für die Pupille des optischen Teils des Instruments und von fotoelektrischen Charakteristiken des Detektors das Finden der Modulationstransferfunktion des Instruments zulassen.

**3.** Optischer Prüfstand nach Anspruch 2, **dadurch gekennzeichnet, dass** das erste Rechenmittel einen Phasenwiederherstellungsalgorithmus umfasst.

4. Optischer Prüfstand nach Anspruch 1, **dadurch gekennzeichnet, dass** der Kollimator mit Mitteln zum translationalen Bewegen seiner Emissionsquelle ausgestattet ist.

5. Optischer Prüfstand nach Anspruch 1, **dadurch gekennzeichnet, dass** der Durchmesser des Kollimators 50 % bis 70 % des Durchmessers der Pupille des Instruments beträgt.

6. Optischer Prüfstand nach Anspruch 1, **dadurch gekennzeichnet, dass** jede Subpupille mit wenigstens einer weiteren Subpupille einen Abdeckbereich von wenigstens 20 % hat.

**Claims**

1. An optical test bench for an optical instrument, said instrument comprising an optical lens (3) and a photodetection unit (33) disposed at the focal spot of said lens, the optical pupil of said optical lens having a diameter $D_T$, said instrument to be tested being arranged on said test bench, said test bench comprising at least:

   • a collimator (4) equipped with an emission source (42) adapted to said instrument and emitting a flat wavefront, said collimator and said instrument being arranged so that an image from said source forms on the photodetection surface of said unit;
   • means (6) for analysing said image,

   **characterised in that**:

   • the diameter $D_c$ of the optical pupil of said collimator is less than the diameter $D_T$ of the pupil of said lens;
   • said test bench further comprises means (44) for translationally moving said collimator, which means are arranged so that said collimator can occupy various positions;
   • for each position, said collimator illuminates part of the pupil of said optical lens, called sub-pupil $SP_k$, with an image called sub-image $SI_k$ forming on the photodetection surface of said unit;
   • the set of various sub-pupils $SP_k$ is arranged so as to cover at least the pupil of said optical lens;
   • said analysis means comprise restoration means at least allowing, on the basis of the various sub-images $SI_k$, the map of the phase error of the optical wavefront, also called "WFE", of said instrument to be reconstructed.

2. The optical test bench according to claim 1, **characterised in that** said restoration means comprise:

   • first means allowing a local wavefront error, denoted $WFE_k$, to be computed for each sub-pupil $SP_k$ on the basis of the analysis of each associated sub-image $SI_k$;
   • second means allowing, on the basis of the various local wavefront errors $WFE_k$, the overall wavefront error WFE to be computed for the pupil of the optical part of said instrument;
   • third means allowing, on the basis of the overall wavefront error for the pupil of the optical part of said instrument and of photoelectric characteristics of said detector, the modulation transfer function of said instrument to be found.

3. The optical test bench according to claim 2, **characterised in that** said first computation means comprise a phase restoration algorithm.

4. The optical test bench according to claim 1, **characterised in that** said collimator is equipped with means for translationally moving its emission source.

5. The optical test bench according to claim 1, **characterised in that** the diameter of said collimator is between 50% and 70% of the diameter of the pupil of said instrument.

6. The optical test bench according to claim 1, **characterised in that** each sub-pupil has, with at least one further sub-pupil, a coverage area of at least 20%.

FIG. 1

FIG. 2

FIG. 3

FIG. 4

# FIG. 5

# FIG. 6

FIG. 7

FIG. 8

FIG. 9

FIG. 10

**EP 2 181 315 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0102822 A